# EUROPÄISCHE PATENTSCHRIFT

(11) **EP 1 086 313 B1**
(45) Veröffentlichungstag und Bekanntmachung des Hinweises auf die Patenterteilung: **09.10.2002**
(21) Anmeldenummer: 99926427.8
(22) Anmeldetag: 26.05.1999
(51) Int. Cl.: F15B 13/00, F16N 7/34, F16T 1/38

(54) **WARTUNGSVORRICHTUNG FÜR DRUCKLUFTANLAGEN**
DEVICE FOR THE MAINTENANCE OF COMPRESSED-AIR SYSTEMS
DISPOSITIF DE MAINTENANCE POUR SYSTEMES A AIR COMPRIME

(30) Priorität: 17.06.1998 DE 19826642
(43) Veröffentlichungstag der Anmeldung: 28.03.2001
(73) Patentinhaber: J. Lorch Gesellschaft & Co. GmbH, 71111 Waldenbuch (DE)
(72) Erfinder: KÜTHER, Ludwig, D-71111 Waldenbuch (DE); SCHÖLLKOPF, Horst, D-70184 Stuttgart (DE)
(74) Vertreter: Dreiss, Fuhlendorf, Steimle & Becker
(86) Internationale Anmeldenummer: EP9903636
(87) Internationale Veröffentlichungsnummer: WO99066213

(56) Entgegenhaltungen:
- EP-A- 0 099 969
- DE-A- 3 211 662
- US-A- 3 703 069

## Beschreibung

Die Erfindung betrifft eine Wartungsvorrichtung mit den Merkmalen des Oberbegriffs des Anspruchs 1.

Aus der US-A-3,703,069 ist eine Wartungseinrichtung der eingangs genannten Art bekannt geworden.

Aus der EP 261 711 A1, der DE 36 06 953 A1 und der DE 295 09 073 U1 sind weitere Wartungsvorrichtungen bekannt geworden. Diese Wartungsvorrichtungen weisen mehrere, unterschiedliche Funktionen für die zu behandelnde Druckluft aufweisende Funktionsmodule auf, die nebeneinander angeordnet sind. Mit diesen Funktionsmodulen wird die zu behandelnde Druckluft gefiltert, entwässert, geölt, oder es wird ein bestimmter Druck eingestellt. Weitere Funktionen sind denkbar. Jede diese Wartungsvorrichtungen hat den wesentlichen Vorteil, dass sie kundenspezifisch den Bedürfnissen angepasst werden kann, d.h. sie weist lediglich diejenigen Funktionsmodule auf, die erforderlich sind, um die Druckluft den speziellen Anforderungen gemäß zu behandeln. Diese Module sind in waagerechter Ausrichtung nebeneinander angeordnet und werden von rechts nach links oder von links nach rechts von der zu behandelnden Druckluft durchströmt.

Dabei wird zum einen als Nachteil angesehen, dass die Verrohrung der Druckluft so geführt werden muss, dass die Wartungsvorrichtung stets von der vorgegebenen Seite, d.h. von links oder von rechts angeströmt wird. Unter Umständen ist dies mit einem nicht unerheblichen Installationsaufwand verbunden.

Ein weiterer Nachteil wird darin gesehen, dass diese bekannten Wartungsvorrichtungen abhängig von der Anzahl der einzelnen Funktionsmodulen relativ breit bauen und daher nicht überall problemlos an Maschinen befestigbar sind.

Ein weiterer Nachteil wird darin gesehen, dass bei der Aufrüstung der Wartungsvorrichtung, d.h. bei der Hinzunahme weiterer Funktionsmodule, die bestehenden Druckluftleitungen entsprechend gekürzt werden müssen bzw. bei der Herausnahme von Funktionsmodulen ein Anschluss an die bestehenden Druckluftleitungen nicht mehr möglich ist, da diese zu kurz sind. Es müssen dann Distanzstücke eingebaut werden.

Der Erfindung liegt daher die Aufgabe zugrunde, eine Wartungsvorrichtung bereit zu stellen, welche relativ klein baut und problemlos erweiterbar bzw. reduzierbar ist.

Diese Aufgabe wird erfindungsgemäß durch eine Wartungsvorrichtung gelöst, die die Merkmale des Anspruchs 1 aufweist.

Durch die vertikale Anordnung übereinander wird die Breite der Wartungseinheit nicht von der Anzahl der Funktionsmodule bestimmt sondern von der Breite der Funktionsmodule. Soll die Wartungsvorrichtung durch Hinzunahme weiterer Funktionsmodule bzw. durch Entfernen einzelner Funktionsmodule verändert werden, so wird hierdurch die Anschlusskonfiguration bzw. die Lage oder der Verlegungsplan der Druckluftleitungen nicht verändert, da die Druckluftleitungen in waagerechter Richtung an die Wartungseinheit herangeführt werden. Es müssen weder Leitungen gekürzt noch verlängert werden, da die erfindungsgemäße Wartungsvorrichtung nicht in der Breite, d.h. in der waagerechten Richtung, sondern in der Höhe, d.h. vertikal, verändert wird. Da die erfindungsgemäße Wartungsvorrichtung relativ schmal baut, kann sie problemlos an Maschinen, insbesondere an einen Maschinenständer o. dgl. befestigt werden, da derartige Ständer genügend breit zur Aufnahme einer derartigen Wartungsvorrichtung sind. Selbstverständlich besteht auch die Möglichkeit, die Wartungsvorrichtung an einer Wand zu befestigen.

Dabei weisen die Funktionsmodule wenigstens einen Kupplungsflansch auf, über welchen sie mit einem weiteren Funktionsmodul verbindbar sind, wobei der Kupplungsflansch eine Überleitungsöffnung für die zu behandelnde Druckluft und eine Überleitungsöffnung für die ganz oder teilweise behandelte Druckluft und insbesondere einen Teil einer elektrischen Steckverbindung aufweist. Über die Überleitungsöffnungen wird die Druckluft vom einen Funktionsmodul in das andere Funktionsmodul überführt, wobei die Funktionsmodule ihrerseits mit einer insbesondere vertikal verlaufenden Luftleitung versehen sind. Diese Luftleitung mündet vorzugsweise an der Oberseite und Unterseite des Funktionsmoduls aus. Innerhalb des Funktionsmoduls wird die Druckluft entweder unbehandelt durchgeleitet oder durchläuft die entsprechende Behandlungsstation. Dabei sind die einzelnen Funktionsmodule an ein Bussystem angekoppelt, wodurch zum einen der individuelle Aufbau einzelner Wartungsvorrichtungen wesentlich vereinfacht wird, zum anderen die elektrische Verkabelung auf ein Minimum reduziert wird.

Die pneumatischen Anschlüsse können bei einer Ausführungsform einander gegenüberliegen oder, wie bei einer anderen Ausführungsform, auf der gleichen Seitenfläche vorgesehen sein. Vorzugsweise weist das Funktionsmodul auf beiden, einander gegenüberliegenden Seitenflächen jeweils einen Anschluss für die die zu behandelnde Druckluft führende Leitung und einen Anschluss für die die behandelte Druckluft führende Leitung auf. Derartige Wartungsvorrichtungen sind universell einsetzbar, da nicht festgelegt ist, auf welcher Seite die Druckluftleitungen herangeführt werden müssen, und die Druckluftleitungen (Zuluft- und Abluftleitungen) müssen nicht neu verlegt bzw. an die Luftführung der Wartungsvorrichtung angepasst werden. So können z.B. die Zuluftleitung und die Abluftleitung auf der linken Seite oder beide auf der rechten Seite angeschlossen werden oder die Zuluftleitung auf der linken und die Abluftleitung auf. der rechten Seite angeschlossen werden oder die Zuluftleitung auf der rechten und die Abluftleitung auf der linken angeschlossen werden. Die jeweils nicht benötigten Anschlüsse am Funktionsmodul sind mit einem Stopfen verschlossen.

Eine Weiterbildung sieht vor, dass die Rückseite des Funktionsmoduls mit jeweils einem der Anschlüsse versehen ist. Auf diese Weise besteht auch die Möglichkeit, dass die eine oder andere oder beide Druckluftleitungen von der Rückseite herangeführt werden.

Bei einer Ausführungsform ist vorgesehen, dass ein Funktionsmodul vorgesehen ist, insbesondere ein Filtermodul, das als Umlenkmodul ausgebildet ist, in welchem die zu behandelnde Druckluft vertikal von oben einströmt, umgelenkt wird und nach oben wieder ausströmt. Dieses Filtermodul kann mit und ohne Filter betrieben werden, wobei bei eingesetztem Filter die Druckluft vor dem Ausströmen gefiltert worden ist. Dieses Funktionselement stellt in der Regel das Abschlusselement dar, welches die Wartungsvorrichtung in vertikaler Richtung abschließt. An dieses Funktionselement wird kein weiteres Funktionselement mehr angekoppelt. Weitere Funktionselemente können dagegen vor diesem Funktionselement, d.h. zwischen dem Anschlussorgan und dem Filtermodul eingebaut werden, so dass das Filtermodul wiederum den Abschluss bildet.

Eine Variante sieht vor, dass wenigstens ein Funktionsmodul mit einem Verteileranschluss versehen ist. Dieser Verteileranschluss bildet eine Verzweigung, so dass Druckluft aus dem System abgezweigt werden kann. Dabei kann der Verteileranschluss innerhalb des Funktionsmoduls vor oder nach dem Funktionselement an die Luftleitung angekoppelt sein, so dass bereits behandelte oder noch nicht behandelte Luft abgezweigt wird.

In bevorzugter Weise besitzen alle Funktionselemente einen derartigen Verteileranschluss, so dass je nach Anforderung ohne großen Installationsaufwand aus jedem Abschnitt der Wartungsvorrichtung Luft abgezweigt werden kann.

Ein Ausführungsbeispiel sieht vor, dass die Luftleitung derart vorgesehen ist und die Funktionsmodule derart angeordnet sind, dass die Luftbehandlung in vertikaler Richtung von unten nach oben erfolgt. Dies bedeutet, dass die zu behandelnde Druckluft zunächst nach dem Einströmen durch alle Funktionselemente hindurch bis zum untersten Funktionselement durchgeleitet wird und dann beginnend mit dem untersten Funktionselement nacheinander innerhalb der einzelnen Funktionselemente in aufsteigender Folge behandelt wird und am obersten Funktionselement die vollständig behandelte Druckluft die Wartungsvorrichtung verlässt.

Ein bevorzugtes Ausführungsbeispiel sieht vor, dass als Anschlussorgan ein Installationsmodul mit den Anschlüssen für die zu behandelnde und die behandelte Druckluft und dem Anschluss für die elektrischen Leitungen vorgesehen ist, dessen Unterseite einen Kupplungsflansch aufweist und welches mit Einstellelementen und/oder einer Anzeigeeinheit, insbesondere auch für die weiteren Funktionselemente versehen ist. Dieses Installationsmodul dient also zum Anschluss aller pneumatischer und elektrischer Leitungen und ist ggf. auch mit Befestigungsmitteln versehen, so dass die Wartungsvorrichtung z.B. an einem Maschinenständer oder an der Wand befestigt werden kann. An dieses Installationsmodul werden die einzelnen Funktionsmodule von unten angekoppelt, wodurch die pneumatischen und elektrischen Anschlüsse nicht beeinflusst werden. Die Einstellung dieser weiteren Funktionsmodule erfolgt über das Installationsmodul, welches hierfür mit Einstellelementen und/oder einer Anzeigeeinheit, z.B. einem LCD-Schirm versehen ist.

In bevorzugter Weise ist lediglich dieses Installationsmodul mit den Befestigungsmitteln versehen, so dass die weiteren Funktionsmodule ohne Weiteres problemlos von der Wartungsvorrichtung zu Revisions-, Wartungs- und/oder Reparaturzwecken entfernt werden können, ohne dass die Wartungsvorrichtung abmontiert werden muss.

Bei einem bevorzugten Ausführungsbeispiel ist vorgesehen, dass der Anschluss für die zu behandelnde Druckluft, der Anschluss für die behandelte Druckluft und gegebenenfalls der Anschluss für elektrische Leitungen an einem der Funktionsmodule vorgesehen ist.

Weitere Vorteile, Merkmale und Einzelheiten der Erfindung ergeben sich aus den Unteransprüchen sowie der nachfolgenden Beschreibung, in der ein bevorzugtes Ausführungsbeispiel im Einzelnen dargestellt ist. Dabei können die in der Zeichnung dargestellten und in den Ansprüchen sowie in der Beschreibung erwähnten Merkmale jeweils einzeln für sich oder in beliebiger Kombination erfindungswesentlich sein. In der Zeichnung zeigen:
- Figur 1: eine schematische Seitenansicht eines ersten Ausführungsbeispiels einer Wartungsvorrichtung;
- Figur 2: eine Frontansicht der Wartungsvorrichtung;
- Figur 3: eine perspektivische Ansicht einer anderen Ausführungsform einer Wartungsvorrichtung;
- Figur 4: eine perspektivische Ansicht eines unteren Abschnitts der Wartungsvorrichtung gemäß Figur 3; und
- Figur 5: eine Explosionsdarstellung eines Funktionsmoduls.

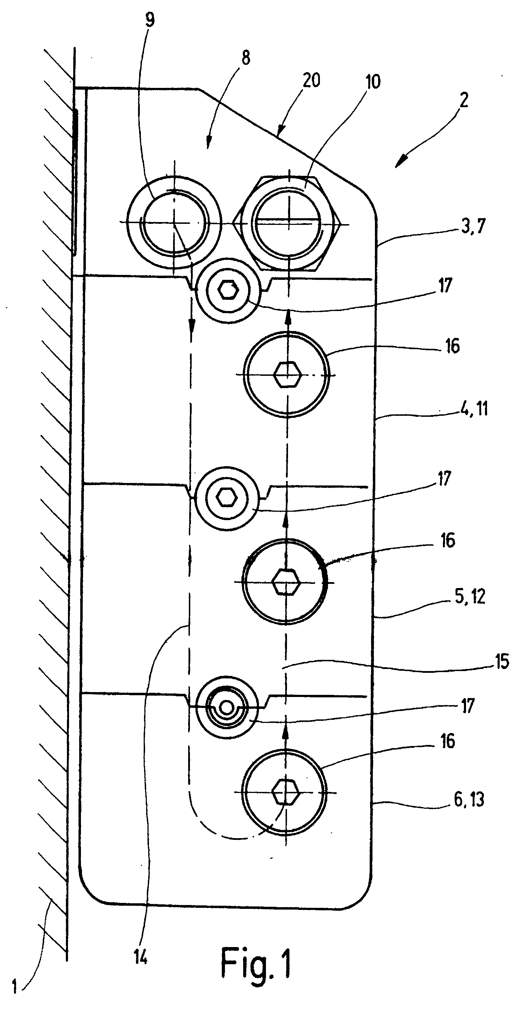

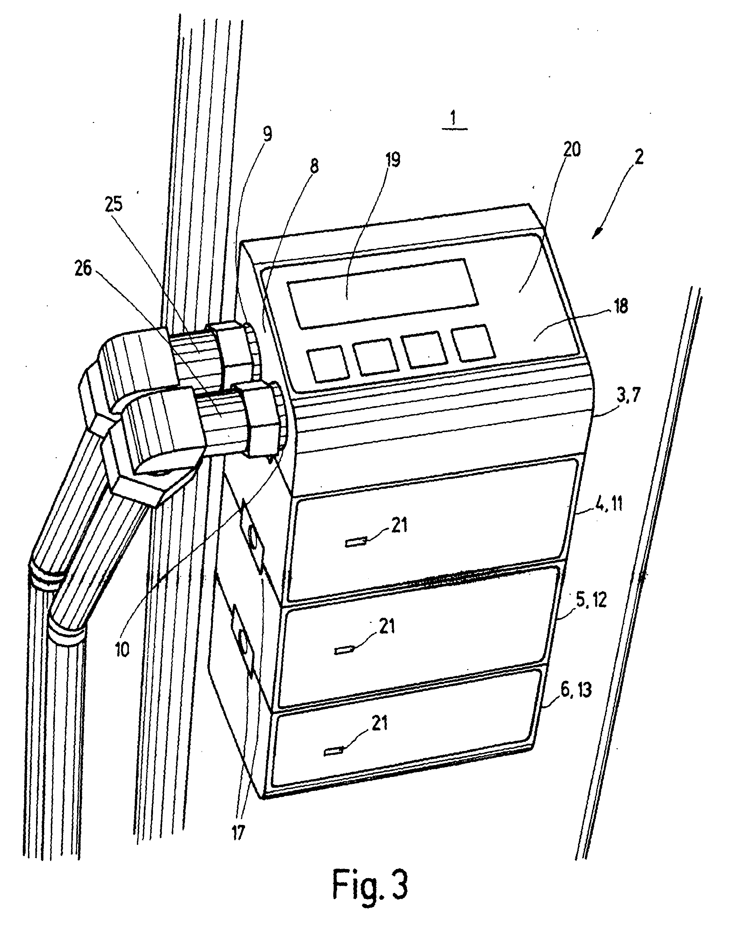

In der Figur 1 ist an einer lediglich schematisch dargestellten Wand 1 eine insgesamt mit 2 bezeichnete Wartungsvorrichtung befestigt, wobei die Wartungsvorrichtung 2 aus insgesamt vier Funktionsmodulen 3, 4, 5 und 6 aufgebaut ist. Dabei ist das oberste Funktionsmodul 3, welches als Installationsmodul 7 ausgebildet ist, an der Wand 1 z.B. über eine (nicht dargestellte) Verschraubung befestigt. Dieses Installationsmodul 7 weist an der dem Betrachter zugewandten Seitenwand 8 bzw. Seitenfläche zwei Anschlüsse 9 und 10 auf. Am Anschluss 9 wird eine die zu behandelnde Druckluft führende Leitung 25 (Figur 3) und am Anschluss 10 eine die behandelte Druckluft führende Leitung 26 (Figur 3) angeschlossen. Die Druckluft wird also an der gleichen Seite, nämlich der Seitenwand 8, dem Funktionsmodul 3 zu- und wieder abgeführt.

Die der Seitenwand 8 gegenüberliegende Seitenwand (nicht dargestellt) besitzt ebenfalls zwei Anschlüsse, so dass die die Druckluft führenden Leitungen 25 und 26 alternativ an dieser Seitenwand angeschlossen werden können. Es besteht aber auch die Möglichkeit, die eine Leitung 25 oder 26 an der Seitenwand 8 und die andere Leitung 26 oder 25 an der gegenüberliegenden Seitenwand anzuschließen.

Unterhalb des Installationsmoduls 7 befindet sich ein Impulsölermodul 11 und unterhalb des Impulsölermoduls 11 ein EP-Reglermodul 12 mit Einschaltventil und Softstart und als unterstes Funktionsmodul 12 ist ein Filtermodul 13 mit Vorfilter und Feinstfilter vorgesehen. Die Funktionsmodule 3 bis 6 werden über eine im hinteren Bereich liegende Luftleitung 14 von oben nach unten durchströmt, wobei die Druckluft im Filtermodul 13 nach oben umgelenkt wird. Dabei durchströmt die Luft ein im Filtermodul 13 vorgesehenes Filter. In der Luftleitung 15, die im vorderen Bereich liegt, werden die einzelnen Funktionsmodule 3 bis 5 von unten nach oben durchströmt, wobei die Luft in jedem Funktionsmodul behandelt wird.

In Figur 1 ist außerdem erkennbar, dass die Funktionsmodule 4 bis 6 an ihren Seitenwänden Verteileranschlüsse 16 aufweisen, über welche ein Teil der Druckluft abgezweigt werden kann. Außerdem sind an den Seitenwänden Kupplungselemente 17 vorgesehen, über welche die einzelnen Funktionsmodule 3 bis 6 miteinander verbunden werden.

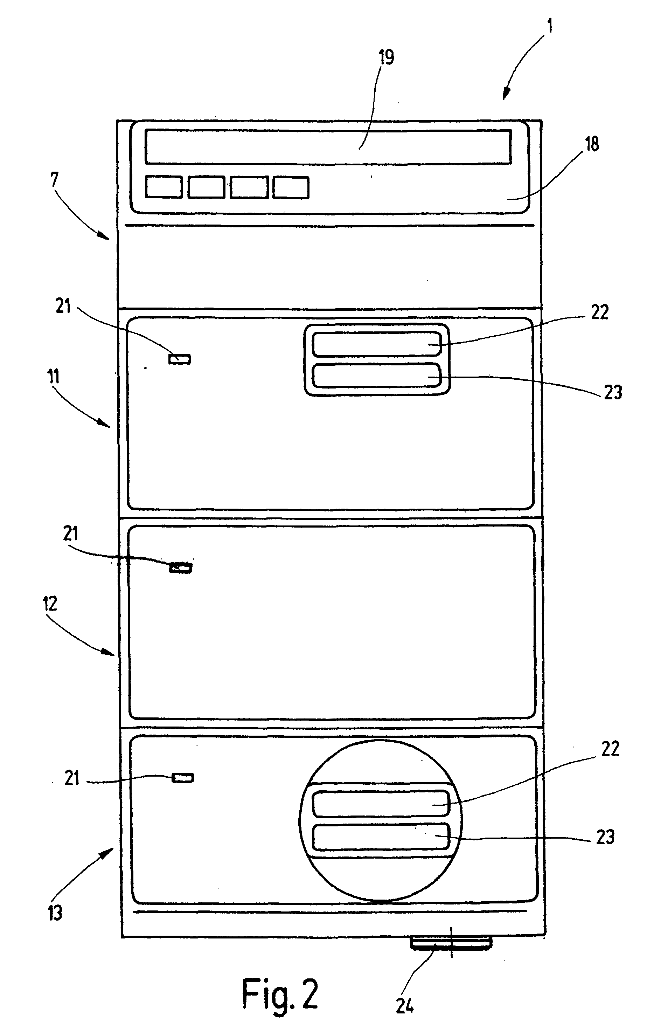

Die Figur 2 zeigt die Frontansicht der Wartungsvorrichtung 2, wobei beim Installationsmodul 7 ein Bedientableau 18 mit einer Anzeigeeinheit 19 erkennbar ist. Das Bedientableau und die Anzeigeeinheit befinden sich ergonomisch günstig an einer nach vorne geneigten Schrägfläche 20 (Figur 1). Unterhalb dieses Installationsmoduls 7 befindet sich das Impulsölermodul 11 mit Betriebsanzeige 21 und weiteren Anzeigeelementen 22 und 23 z.B. für den Betriebszustand und den Ölvorrat. Das EP-Reglermodul 12 ist ebenfalls mit einer Betriebsanzeige 21 versehen. Der eingestellte Reglerdruck ist am Bedientableau 18 einstellbar und kann am Anzeigeelement 19 angezeigt bzw. abgelesen werden. Über den Verteileranschluss 18 kann Druckluft mit geringerem Druck abgezweigt werden.

Das Filtermodul 13 besitzt ebenfalls eine Betriebsanzeige 21 sowie Anzeigeelemente 22 und 23. An der Unterseite ist das Filtermodul 13 mit einem Ablassstopfen 24 z.B. für Wasser versehen.

Die Figur 3 zeigt eine perspektivische Ansicht der Wartungsvorrichtung 2, wobei lediglich die Kupplungselemente 17 alternativ ausgestaltet sind. Die beiden Druckluftleitungen 25 und 26 sind an der gleichen Seitenwand 8 an den Anschlüssen 9 und 10 angeschlossen. Es ist ohne weiteres erkennbar, dass problemlos weitere Funktionsmodule unterhalb des Installationsmoduls 7 und oberhalb des Funktionsmoduls 6 bzw. des Filtermoduls 13 angekoppelt werden können, ohne dass die gesamte Wartungsvorrichtung 2 von den Druckluftleitungen 25 und 26 bzw. von der Wand 1 gelöst werden muss. Eine Änderung an den Druckluftleitungen 25 und 26 hinsichtlich der Verlegung oder deren Länge muss ebenfalls nicht vorgenommen werden. Dies gilt auch für den Fall, wenn eines der Funktionsmodule entfernt wird. Da die Druckluftleitungen 25 und 26 sowohl an der sichtbaren Seitenwand 8 als auch an der gegenüberliegenden Seitenwand oder aber auch an der Rückseite des Installationsmoduls 7 angeschlossen werden können, ist die Wartungsvorrichtung 2 universell einsetzbar und die Druckluftleitungen 25 und 26 können nach Belieben angeschlossen werden bzw. es müssen vorhandene Installationen nicht verändert werden.

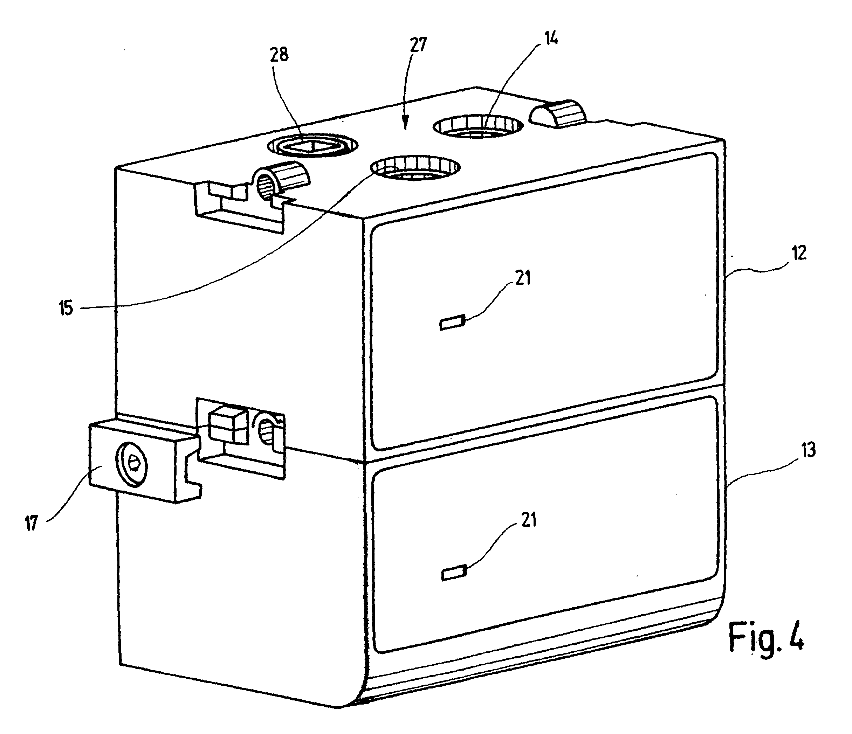

Die Figur 4 zeigt das EP-Reglermodul 12 und das Filtermodul 13, die über das Kupplungselement 17 miteinander verbunden werden. Die Oberseite des EP-Reglermoduls 12 wird von einem Kupplungsflansch 27 gebildet, in den die beiden Luftleitungen 14 und 15 ein- bzw. ausmünden. Außerdem ist ein Teil einer elektrischen Steckverbindung 28 erkennbar, über welche die elektrischen Leitungen der einzelnen Funktionsmodule miteinander verbunden werden.

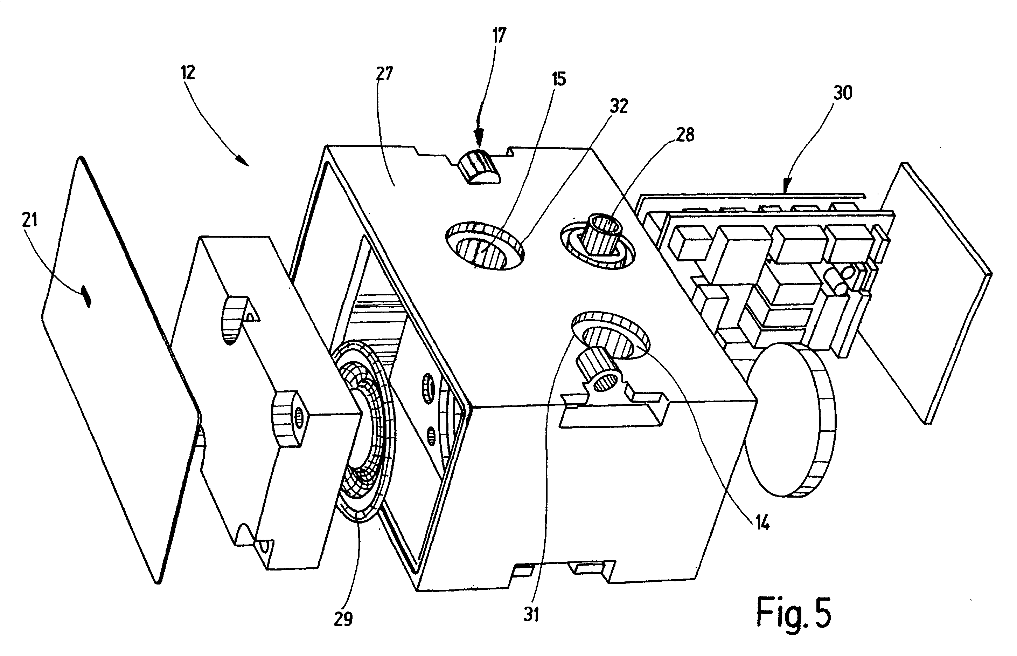

Die Figur 5 zeigt das EP-Reglermodul 12 und es sind insbesondere die Membran 29, über welche der gewünschte Druck eingestellt wird, sowie die Elektronik 30 erkennbar. Die beiden Luftleitungen 14 und 15 münden an Überleitungsöffnungen 31 und 32 aus dem Kupplungsflansch 27 aus. Eine Abdichtung wird über nicht dargestellte Gummidichtungen (z.B. O-Ringe oder dgl.) erreicht.

Insgesamt kann festgestellt werden, dass die einzelnen Funktionsmodule 3 bis 6 in vertikaler Richtung übereinander angeordnet sind und dass die zu behandelnde Druckluft und die behandelte Druckluft innerhalb der Funktionsmodule 3 bis 6 im Wesentlichen in vertikaler Richtung geführt wird. Bei einer Erweiterung der Wartungsvorrichtung 2 bzw. beim Entfernen eines Funktionsmoduls ändert sich lediglich die vertikale Abmessung der Wartungsvorrichtung, wobei auf jeden Fall die Breite der Wartungsvorrichtung 2 und insbesondere die Anschlüsse 9 und 10 unverändert bleiben.

## Patentansprüche

1. Wartungsvorrichtung (1) für Druckluftanlagen, mit wenigstens zwei Funktionsmodulen (3 bis 6), wie ein Filtermodul (13), ein Absperrmodul, ein Reglermodul (12) o. dgl., wobei die Wartungsvorrichtung (1) einen Anschluss (9) für eine die zu behandelnde Druckluft führende Leitung (25), einen Anschluss (10) für eine die behandelte Druckluft führende Leitung (26) und gegebenenfalls einen Anschluss für elektrische Leitungen aufweist und alle Funktionsmodule (3 bis 6) vertikal übereinander angeordnet und miteinander über Kupplungselemente (17) verbunden sind, wobei jedes Funktionsmodul (3 bis 6) wenigstens einen Kupplungsflansch (27) aufweist, über welchen Luftleitungen (14, 15) ein- bzw. ausmünden, wobei der Kupplungsflansch (27) eine Überleitungsöffnung (31) für die zu behandelnde Druckluft und eine Überleitungsöffnung (32) für die ganz oder teilweise behandelte Druckluft, und insbesondere einen Teil einer elektrischen Steckverbindung (28) aufweist, **dadurch gekennzeichnet, dass** die Kupplungsflansche (27) der Funktionsmodule (3 bis 6) gleich ausgebildet sind und dass das die Anschlüsse (9 und 10) aufweisende Funktionsmodul (3) als Endmodul ausgebildet ist.

2. Wartungsvorrichtung nach Anspruch 1, **dadurch gekennzeichnet, dass** die Anschlüsse (9 und 10) einander gegenüberliegen.

3. Wartungsvorrichtung nach Anspruch 1, **dadurch gekennzeichnet, dass** die Anschlüsse (9 und 10) auf der gleichen Seitenwand (8) vorgesehen sind.

4. Wartungsvorrichtung nach einem der Ansprüche 1 bis 3, **dadurch gekennzeichnet, dass** einander gegenüberliegende Seitenwände jeweils Anschlüsse (9 und 10) aufweist.

5. Wartungsvorrichtung nach einem der Ansprüche 1 bis 4, **dadurch gekennzeichnet, dass** die Rückseite des Funktionsmoduls (3) mit jeweils einem der Anschlüsse (9 und 10) versehen ist.

6. Wartungsvorrichtung nach einem der vorhergehenden Ansprüche, **dadurch gekennzeichnet, dass** Funktionsmodule (3 bis 5) mit einer vertikal verlaufenden Luftleitung (14, 15) versehen sind.

7. Wartungsvorrichtung nach einem der vorhergehenden Ansprüche, **dadurch gekennzeichnet, dass** die Luftleitung (14, 15) an der Oberseite und Unterseite des Funktionsmoduls (4, 5) ausmündet.

8. Wartungsvorrichtung nach einem der vorhergehenden Ansprüche, **dadurch gekennzeichnet, dass** ein Funktionsmodul (6) vorgesehen ist, insbesondere ein Filtermodul (13), das als Umlenkmodul ausgebildet ist, in welchem die zu behandelnde Druckluft vertikal von oben einströmt, umgelenkt wird und nach oben ausströmt.

9. Wartungsvorrichtung nach einem der vorhergehenden Ansprüche, **dadurch gekennzeichnet, dass** wenigstens ein Funktionsmodul (4 bis 6) mit einem Verteileranschluss (16) versehen ist.

10. Wartungsvorrichtung nach einem der vorhergehenden Ansprüche, **dadurch gekennzeichnet, dass** die Luftleitung (15) derart vorgesehen ist und die Funktionsmodule (4, 5) derart angeordnet sind, dass die Luftbehandlung in vertikaler Richtung von unten nach oben erfolgt.

11. Wartungsvorrichtung nach einem der vorhergehenden Ansprüche, **dadurch gekennzeichnet, dass** ein Installationsmodul (7) mit den Anschlüssen (9 und 10) für die Druckluft und dem Anschluss für die elektrischen Leitungen vorgesehen ist, dessen Unterseite einen Kupplungsflansch (27) aufweist und welches mit Einstellelementen (18) und/oder einer Anzeigeeinheit (19), insbesondere auch für die weiteren Funktionsmodule (4 bis 6) versehen ist.

12. Wartungsvorrichtung nach Anspruch 11, **dadurch gekennzeichnet, dass** das Installationsmodul (7) mit Befestigungsmitteln versehen ist.

13. Wartungsvorrichtung nach Anspruch 12, **dadurch gekennzeichnet, dass** nur eines der Funktionsmodule (3 bis 6) mit Befestigungsmitteln versehen ist.

14. Wartungsvorrichtung nach einem der vorhergehenden Ansprüche, **dadurch gekennzeichnet, dass** die Anschlüsse (9,10) und gegebenenfalls der Anschluss für elektrische Leitungen an einem der Funktionsmodule (3) vorgesehen ist.

15. Wartungsvorrichtung nach einem der vorhergehenden Ansprüche, **dadurch gekennzeichnet, dass** ein Feldbussystem zum Übertragen von elektrischen Signalen über die elektrischen Leitungen vorgesehen ist.

## Claims

1. A maintenance device (1) for compressed air systems, comprising at least two functional modules (3 to 6), such as a filter module (13), a shut-off module, and a regulator module (12) or the like, said maintenance device (1) having at least one connection (9) for a line (25) carrying compressed air to be treated, a connection (10) for a line (26) carrying treated compressed air, where applicable a connection for electrical lines, all functional modules (3 to 6) disposed in vertical alignment and interconnected with coupling elements (17), each functional module (3 to 6) having at least one coupling flange (27), via which air lines (14, 15) passes in and out, the coupling flange (27) having a transfer opening (31) for the compressed air to be treated and a transfer opening (32) for the completely or partially treated compressed air and especially a part of a electric plug connection (28), **characterized in that** the coupling flanges (27) of the functional modules (3 to 6) are built the same and that the functional module (3) incorporating the connections (9 and 10) is manufactured as end module.

2. Maintenance according to claim 1, **characterized in that** the connections (9 and 10) face each other.

3. Maintenance according to claim 1, **characterized in that** the connections (9 and 10) are disposed on a same side wall.

4. Maintenance according to one of claims 1 to 3, **characterized in that** each of side walls facing one another comprise connections (9 and 10).

5. Maintenance according to one of claims 1 to 4, **characterized in that** the rear wall of the functional module (3) having one of each of said connections (9 and 10).

6. Maintenance according to one of the preceding claims, **characterized in that** functional modules (3 to 5)comprise a vertically extending air line (14, 15).

7. Maintenance according to one of the preceding claims, **characterized in that** said air line (14, 15) feeds into an upper side and a lower side of functional module (4, 5).

8. Maintenance according to one of the preceding claims, **characterized in that** a functional module (6) is provided, especially a filter module, which is built as a deflection module into which compressed air to be treated flows vertically from above, is deflected, and exits in an upward direction.

9. Maintenance according to one of the preceding claims, **characterized in that** at least one functional module (4 to 6) comprises a distributor connection (16).

10. Maintenance according to one of the preceding claims, **characterized in that** the air line (15) is arranged such and the functional modules are arranged such that air treatment is carried out in a vertically ascending direction.

11. Maintenance according to one of the preceding claims, **characterized in that** an installation module (7) is provided, having the connections (9 and 10) and said electric lines connection, wherein a coupling flange (27) is disposed on the lower side of said installation module (7), said installation module (7) further comprising adjusting elements (18) and/or a display unit (19), especially also for the other functional modules (4 to6).

12. Maintenance according to one of the preceding claims, **characterized in that** installation module (7) comprises fastening means.

13. Maintenance according to one of the preceding claims, **characterized in that** only one of the functional modules (3 to 6) comprises fastening means.

14. Maintenance according to one of the preceding claims, **characterized in that** the connections (9, 10) and if applicable the electric plug connection are all disposed on one of the functional modules (3).

15. Maintenance according to one of the preceding claims, **characterized in that** further comprising a field bus system for transfer of electric signals via electric lines.

## Revendications

1. Dispositif de maintenance (1) pour systèmes à air comprimé comportant au moins deux modules fonctionnels (3 à 6), tels qu'un module de filtrage (13), un module d'arrêt, un module de régulation (12) ou similaires, le dispositif de maintenance (1) présentant un raccordement (9) pour une conduite (25) transportant l'air comprimé à traiter, un raccordement (10) pour une conduite (26) transportant l'air comprimé traité et éventuellement un raccordement pour des lignes électriques, et tous les modules fonctionnels (3 à 6) étant agencés verticalement les uns au-dessus des autres et reliés les uns aux autres par des éléments d'accouplement (17), chaque module fonctionnel (3 à 6) présentant au moins une bride d'accouplement (27) au niveau de laquelle partent et arrivent des conduites d'air (14, 15), la bride d'accouplement (27) présentant un orifice de transfert (31) de l'air comprimé à traiter et un orifice de transfert (32) de l'air comprimé totalement ou partiellement traité et en particulier une partie d'une connexion électrique mâle-femelle (28), **caractérisé en ce que** les brides d'accouplement (27) des modules fonctionnels (3 à 6) sont de conception identique et **en ce que** le module fonctionnel (3) présentant les raccordements (9 et 10) est réalisé sous la forme d'un module terminal.

2. Dispositif de maintenance selon la revendication 1, **caractérisé en ce que** les raccordements (9 et 10) sont agencés à l'opposé l'un de l'autre.

3. Dispositif de maintenance selon la revendication 1, **caractérisé en ce que** les raccordements (9 et 10) sont agencés sur la même paroi latérale (8).

4. Dispositif de maintenance selon l'une des revendications 1 à 3, **caractérisé en ce que** chacune des parois latérales opposées présente des raccordements (9 et 10).

5. Dispositif de maintenance selon l'une des revendications 1 à 4, **caractérisé en ce que** la face arrière de chaque module fonctionnel (3) présente un des raccordements (9 et 10).

6. Dispositif de maintenance selon l'une des revendications précédentes, **caractérisé en ce que** les modules fonctionnels (3 à 5) sont dotés d'une conduite d'air verticale (14, 15).

7. Dispositif de maintenance selon l'une des revendications précédentes, **caractérisé en ce que** la conduite d'air (14, 15) débouche sur les faces supérieure et inférieure du module fonctionnel (4, 5).

8. Dispositif de maintenance selon l'une des revendications précédentes, **caractérisé en ce qu'**il est prévu un module fonctionnel (6), en particulier un module de filtrage (13) conçu sous la forme d'un module de déviation, dans lequel l'air comprimé à traiter pénètre verticalement par le haut, puis est dévié pour ressortir également par le haut.

9. Dispositif de maintenance selon l'une des revendications précédentes, **caractérisé en ce qu'**il est prévu au moins un module fonctionnel (4 à 6) présentant un raccordement de distribution (16).

10. Dispositif de maintenance selon l'une des revendications précédentes, **caractérisé en ce que** la conduite d'air (15) est prévue de telle sorte et les modules fonctionnels (4, 5) sont agencés de telle sorte que le traitement de l'air s'effectue dans la direction verticale et de bas en haut.

11. Dispositif de maintenance selon l'une des revendications précédentes, **caractérisé en ce qu'**il est prévu un module d'installation (7) qui présente les raccordements (9 et 10) pour l'air comprimé et le raccordement pour les lignes électriques et dont la face inférieure est dotée d'une bride d'accouplement (27), ledit module d'installation comportant des éléments de réglage (18) et/ou une unité d'affichage (19) servant en particulier également pour les autres modules fonctionnels (4 à 6).

12. Dispositif de maintenance selon la revendication 11, **caractérisé en ce que** le module d'installation (7) est doté de moyens de fixation.

13. Dispositif de maintenance selon la revendication 12, **caractérisé en ce qu'**un seul des modules fonctionnels (3 à 6) est doté de moyens de fixation.

14. Dispositif de maintenance selon l'une des revendications précédentes, **caractérisé en ce que** les raccordements (9, 10) et éventuellement le raccordement des lignes électriques sont prévus sur un des modules fonctionnels (3).

15. Dispositif de maintenance selon l'une des revendications précédentes, **caractérisé en ce qu'**il est prévu un système de bus de terrain pour transmettre des signaux électriques via les lignes électriques.
